# EUROPEAN PATENT APPLICATION

(11) **EP 4 752 416 A1**
(43) Date of publication of application: **03.06.2026**
(21) Application number: 24844720.3
(22) Date of filing: 19.07.2024
(51) Int. Cl.: F16K 27/04

(54) **PILOT VALVE SEAT, PILOT VALVE AND REVERSING VALVE**

(30) Priority: 24.07.2023 CN 202321963902 U
(71) Applicant: Zhejiang Dunan Artificial Environment Co., Ltd., Shaoxing Zhejiang 311800 (CN)
(72) Inventor: DING, Haihu, Shaoxing, Zhejiang 311800 (CN); CAI, Bin, Shaoxing, Zhejiang 311800 (CN)
(74) Representative: Studio Torta S.p.A.
(86) International application number: PCT/CN2024/106407
(87) International publication number: WO 2025/021029

(57) **Abstract**

Provided in the present application are a pilot valve seat, a pilot valve and a reversing valve. The pilot valve seat comprises a valve seat body (100); the valve seat body (100) is provided with a plurality of pilot valve ports (101), which are used for connecting a capillary tube assembly; and the valve seat body (100) has an arc-shaped surface (102), the arc-shaped surface (102) being provided with an accommodating space arranged spaced apart from the pilot valve ports (101). When welded to a guide pipe (200) and the capillary tube assembly, the pilot valve seat is mounted in the guide pipe (200), the arc-shaped surface (102) of the valve seat body (100) is in contact with an inner wall of the guide pipe (200), and the capillary tube assembly is inserted into the corresponding pilot valve ports (101). Since the accommodating space is arranged spaced apart from the pilot valve ports (101), the installation of the capillary tube assembly is not affected; and solder is added to an outer surface of the guide pipe (200) and an outer surface of the capillary tube assembly for welding. During the welding process, the solder flows into the accommodating space of the valve seat body (100), such that the possibility of the solder flowing out of the range of the pilot valve seat to form overlapping is reduced, the hidden danger of flow welding is reduced, and it is ensured that the distance between a pipe opening of the guide pipe (200) and the pilot valve seat meets the requirement for positioning.

## Description

### CROSS-REFERENCE TO RELATED APPLICATION

The present disclosure claims priority to Chinese Patent Application No. 202321963902.6 filed on July 24, 2023, which is incorporated herein by reference in its entirety.

### TECHNICAL FIELD

The present disclosure relates to the technical field of valves, in particular to a pilot valve seat, a pilot valve, and a reversing valve.

### BACKGROUND

In the related art, a pilot valve includes a guide pipe, a pilot valve seat, a reed, a slider, and an iron core. The pilot valve seat is fixedly mounted within the guide pipe by soldering and is provided with a plurality of pilot valve ports through which refrigerant fluid passes. Capillary tubes are soldered to the pilot valve ports, and the slider is pressed against the pilot valve seat by the reed and driven by the iron core to slide relative to the pilot valve seat, so that two adjacent pilot valve ports are connected through the slider.

During a process of soldering the capillary tubes, the pilot valve seat, and the guide pipe, if an excessive amount of solder is added or a soldering temperature is too high, solder beads may be formed in a soldering area between the guide pipe and the pilot valve seat, which causes a distance between a nozzle of the guide pipe and the pilot valve seat to fail to meet positioning requirements, thereby affecting a stroke of the movable iron core. As a result, the slider cannot cover the two pilot valve ports that need to be in communication, thereby leading to failure of the pilot valve.

### SUMMARY

The technical problem to be solved by the present disclosure is how to provide a mounting bracket capable of alleviating eccentricity and shaking phenomena generated during rotation of a laser ranging sensor.

An objective of the present disclosure is to provide a pilot valve seat, a pilot valve, and a reversing valve, to reduce the possibility of forming solder beads and ensure that the distance between the nozzle of the guide pipe and the pilot valve seat meets positioning requirements.

Based on the above objective, the present disclosure provides a pilot valve seat, including a valve seat body. The valve seat body is provided with a plurality of pilot valve ports for connecting a capillary tube assembly; the valve seat body has an arc-shaped surface, the arc-shaped surface is provided with an accommodating space, and the accommodating space is spaced apart from the pilot valve ports.

In an embodiment of the present disclosure, the valve seat body has a first end and a second end oppositely arranged along an axial direction, and the accommodating space is located between the pilot valve ports and the first end.

In an embodiment of the present disclosure, the accommodating space is a step-shaped recess, and the step-shaped recess penetrates an end face of the first end of the valve seat body.

In an embodiment of the present disclosure, a length of the step-shaped recess is *A*, 0.5*mm*≤*A*≤0.5*L*, and a depth of the step-shaped recess is *H*₁, 0.2*mm*≤*H*₁≤0.5*H*, wherein *L* is a minimum distance between the end face of the first end of the valve seat body and an edge of the pilot valve port, and *H* is a thickness of the valve seat body.

In an embodiment of the present disclosure, the accommodating space is a groove, and the groove extends along a circumferential direction of the arc-shaped surface.

In an embodiment of the present disclosure, a width of the groove is *B*, 0.5*mm*≤*B*≤(*L*₁ -0.5*mm*), and a depth of the groove is *H*₂, 0.2*mm*≤*H*₂≤0.5*H*, wherein *L*₁ is a distance between a groove wall of the groove away from the first end and an end face of the first end, 1*mm*≤*L*₁≤(0.5*L -* 0.5*mm*), *L* is a minimum distance between the end face of the first end of the valve seat body and an edge of the pilot valve port, and *H* is a thickness of the valve seat body.

In an embodiment of the present disclosure, a shape of a projection of a groove bottom of the groove in a reference plane is a straight line or a curved line, wherein the reference plane passes through an axis of the valve seat body and intersects with the valve seat body.

In an embodiment of the present disclosure, a guiding inclined surface is provided at a connection between a lower surface of the valve seat body and a first end of the valve seat body.

Based on the above objective, the present disclosure further provides a pilot valve, including a guide pipe, a capillary tube assembly, and the above-mentioned pilot valve seat. The valve seat body is located inside the guide pipe, the capillary tube assembly is soldered to the pilot valve ports, the arc-shaped surface of the valve seat body is soldered to an inner wall of the guide pipe, and an opening of the accommodating space faces the inner wall of the guide pipe.

Based on the above objective, the present disclosure further provides a reversing valve, including the above-mentioned pilot valve.

The present disclosure mainly has the following beneficial effects.

The pilot valve seat according to the present disclosure includes the valve seat body. The valve seat body is provided with the plurality of pilot valve ports for connecting the capillary tube assembly. The valve seat body has the arc-shaped surface. The arc-shaped surface is provided with the accommodating space, and the accommodating space is spaced apart from the pilot valve ports. When the guide pipe and the capillary tube assembly are soldered, the pilot valve seat is mounted into the guide pipe, the arc-shaped surface of the valve seat body is in contact with the inner wall of the guide pipe, and the capillary tube assembly is inserted into the corresponding pilot valve ports. Since the accommodating space is spaced apart from the pilot valve ports, the mounting of the capillary tube assembly will not be affected. Solder is added to outer surfaces of the guide pipe and the capillary tube assembly for soldering. During the soldering process, the solder may flow into the accommodating space of the valve seat body, thereby lowering the possibility that the solder flows out of a range of the pilot valve seat and forms solder beads, reducing a hidden danger of solder flow, and ensuring that a distance between a nozzle of the guide pipe and the pilot valve seat meets positioning requirements.

### BRIEF DESCRIPTION OF THE DRAWINGS

FIG. 1 is a structural schematic view of a pilot valve seat according to an embodiment of the present disclosure;
FIG. 2 is a structural schematic view of a pilot valve seat according to an embodiment of the present disclosure from another viewing angle;
FIG. 3 is a left view of a pilot valve seat according to an embodiment of the present disclosure;
FIG. 4 is a front view of a pilot valve seat according to an embodiment of the present disclosure;
FIG. 5 is another structural schematic view of a pilot valve seat according to an embodiment of the present disclosure;
FIG. 6 is a structural schematic view of the pilot valve seat shown in FIG. 5 from another viewing angle;
FIG. 7 is a left view of the pilot valve seat shown in FIG. 5;
FIG. 8 is a front view of the pilot valve seat shown in FIG. 5;
FIG. 9 is a third structural schematic view of a pilot valve seat according to an embodiment of the present disclosure;
FIG. 10 is a partial structural schematic view of a pilot valve according to an embodiment of the present disclosure;
FIG. 11 is a partially enlarged view of part I in FIG. 10.

Reference numerals:
100. valve seat body; 11. first end; 12. second end; 101. pilot valve port; 102. arc-shaped surface; 103. lower surface; 1031. guiding inclined surface; 104a. step-shaped recess; 104b. groove; 1041b. groove wall; 1042b. groove bottom; 105. arc-shaped section; 200. guide pipe; 301. E-capillary tube; 302. S-capillary tube; 303. C-capillary tube; 304. D-capillary tube

### DETAILED DESCRIPTION

Exemplary embodiments will now be described more fully with reference to the accompanying drawings. However, exemplary embodiments may be embodied in many forms and should not be construed as limiting the embodiments set forth herein; on the contrary, these embodiments are provided such that the present disclosure will be thorough and complete, and will fully convey a concept of exemplary embodiments to those skilled in the art. The same reference numerals in the drawings denote the same or similar structures, and thus their detailed descriptions will be omitted.

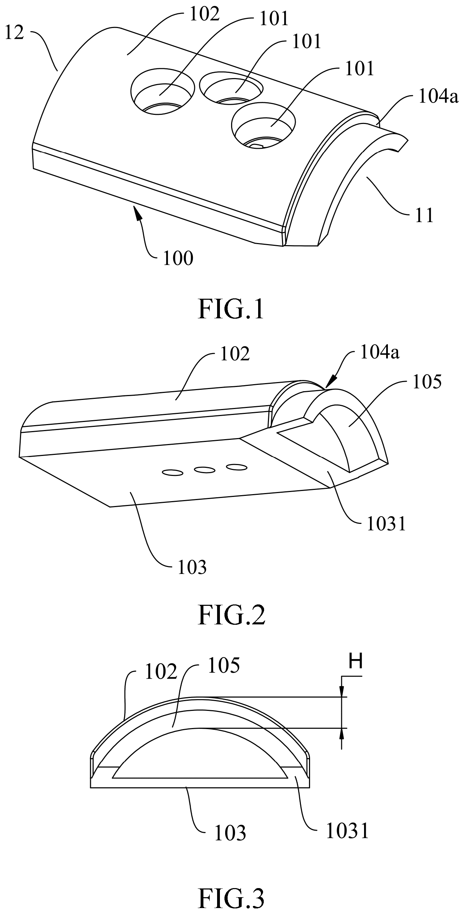

Referring to FIGS. 1 to 11, the present disclosure provides a pilot valve seat, including a valve seat body 100. The valve seat body 100 is provided with a plurality of pilot valve ports 101 for connecting a capillary tube assembly. The valve seat body 100 has an arc-shaped surface 102. The arc-shaped surface 102 is provided with an accommodating space. The accommodating space is spaced apart from the pilot valve ports 101.

When the pilot valve seat according to the present disclosure is soldered to a guide pipe 200 and the capillary tube assembly, the pilot valve seat is mounted into the guide pipe 200, the arc-shaped surface 102 of the valve seat body 100 is in contact with an inner wall of the guide pipe 200, and the capillary tube assembly is inserted into the corresponding pilot valve ports 101. Since the accommodating space is spaced apart from the pilot valve ports 101, the mounting of the capillary tube assembly will not be affected. Solder is added to outer surfaces of the guide pipe 200 and the capillary tube assembly for soldering. During the soldering process, the solder may flow into the accommodating space of the valve seat body 100, thereby lowering the possibility that the solder flows out of a range of the pilot valve seat and forms solder beads, reducing a hidden danger of solder flow, and ensuring that a distance between a nozzle of the guide pipe 200 and the pilot valve seat meets positioning requirements.

In an embodiment, referring to FIGS. 1 and 2, the valve seat body 100 further has a lower surface 103 opposite to the arc-shaped surface 102. The number of the pilot valve ports 101 is three. The pilot valve ports 101 penetrate the arc-shaped surface 102 and the lower surface 103 of the valve seat body 100. For example, an opening area of the pilot valve port 101 on the arc-shaped surface 102 is larger than an opening area of the pilot valve port 101 on the lower surface 103.

In an embodiment, the valve seat body 100 has a first end 11 and a second end 12 oppositely arranged along an axial direction, and the accommodating space is located between the pilot valve ports and the first end 11. During installation, the second end 12 of the valve seat body 100 is aligned with an open end of the guide pipe 200 and mounted into the guide pipe 200; after installation, the first end 11 of the valve seat body 100 faces the open end of the guide pipe 200.

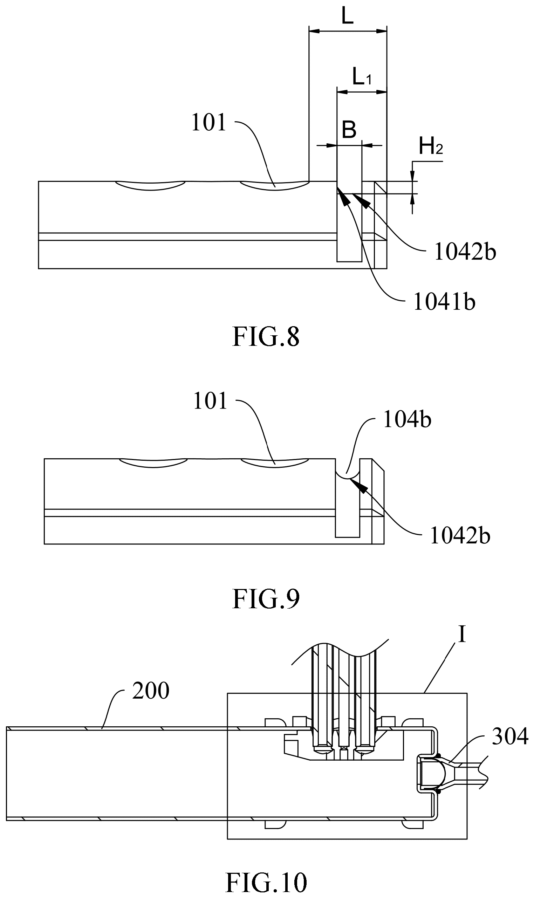

Referring to FIG. 10, the capillary tube assembly includes an E-capillary tube 301, an S-capillary tube 302, and a C-capillary tube 303. One end of each of the E-capillary tube 301, the S-capillary tube 302, and the C-capillary tube 303 is inserted into a corresponding one of three pilot valve ports 101 to facilitate soldering.

The capillary tube assembly further includes a D-capillary tube 304, which is in communication with an end of the guide pipe 200 close to the second end 12 of the valve seat body 100. Components such as a slider and an iron core are mounted into the guide pipe 200 from an end of the guide pipe 200 close to the first end 11 of the valve seat body 100.

Since the accommodating space is located between the pilot valve ports and the first end 11, during the soldering process, the solder close to the first end 11 of the valve seat body may preferentially flow into the accommodating space, which can lower the possibility of the solder flowing out of the range of the pilot valve seat and forming solder beads, reduce the hidden danger of solder flow, and ensure that the distance between the nozzle of the guide pipe 200 and the pilot valve seat meets the positioning requirements. The solder away from the first end 11 of the valve seat body flows to an exterior of the valve seat body, which typically does not affect the positioning accuracy.

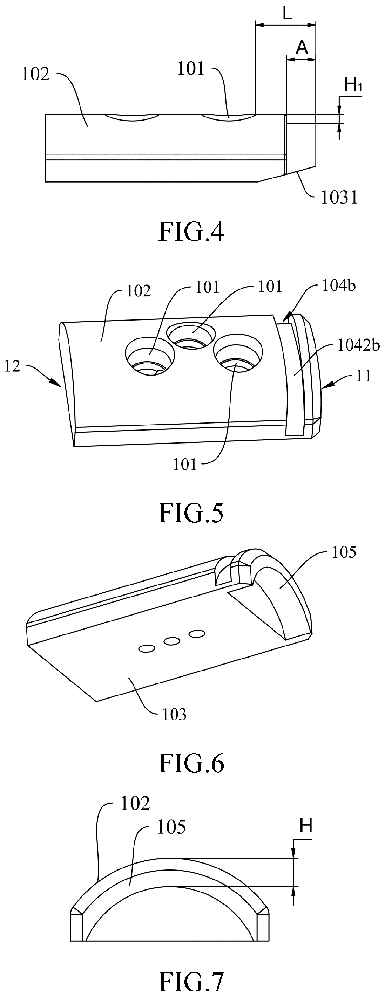

In a possible design, the accommodating space is a step-shaped recess 104a. For example, referring to FIGS. 2 and 4, the step-shaped recess 104a is recessed from the arc-shaped surface 102 towards the lower surface 103, and the step-shaped recess 104a penetrates an end face of the first end 11 of the valve seat body 100.

In this possible design, referring to FIGS. 3 and 4, a length of the step-shaped recess 104a is *A,* 0.5*mm*≤*A*≤0.5*L*, and a depth of the step-shaped recess 104a is *H*₁, 0.2*mm*≤*H*₁≤0.5*H*, in which *L* is a minimum distance between the end face of the first end 11 of the valve seat body 100 and an edge of the pilot valve port 101, and *H* is a thickness of the valve seat body 100. This can not only ensure structural strength of the valve seat body 100, but also provide relatively sufficient space for excess solder, lowering the possibility that the solder flows out of the range of the pilot valve seat and forms solder beads, reducing the hidden danger of solder flow, and ensuring that the distance between the nozzle of the guide pipe 200 and the pilot valve seat meets the positioning requirements.

It should be understood that there is an arc-shaped section 105 at a position of the valve seat body 100 close to the first end 11, and the thickness *H* of the valve seat body 100 refers to a radial distance between the arc-shaped section 105 and the arc-shaped surface 102. The minimum distance between the end face of the first end 11 of the valve seat body 100 and the edge of the pilot valve port 101 refers to a minimum vertical distance between the end face of the first end 11 of the valve seat body 100 and the edge of the pilot valve port 101 close to the first end 11.

In the present disclosure, an end face of the arc-shaped section 105 may limit a position of the iron core of the pilot valve. At the same time, for the iron core with a stepped end face, an avoiding space formed below the arc-shaped section 105 can avoid a step of the iron core.

In another possible design, referring to FIG. 5, the accommodating space is a groove 104b, and the groove 104b extends along a circumferential direction of the arc-shaped surface 102.

In this possible design, referring to FIGS. 7 and 8, a width of the groove 104b is *B*, 0.5*mm*≤*B*≤(*L*₁ - 0.5*mm*), and a depth of the groove 104b is *H*₂, 0.2*mm*≤*H*₂≤0.5*H*, *in* which *L*₁ is a distance between a groove wall 1041b of the groove 104b away from the first end 11 and the end face of the first end 11, 1*mm*≤*L*₁≤(0.5*L -* 0.5*mm*), *L* is a minimum distance between the end face of the first end 11 of the valve seat body 100 and the edge of the pilot valve port 101, and *H* is the thickness of the valve seat body 100. This can not only ensure the structural strength of the valve seat body 100, but also provide relatively sufficient space for excess solder, lowering the possibility that the solder flows out of the range of the pilot valve seat and forms solder beads, reducing the hidden danger of solder flow, and ensuring that the distance between the nozzle of the guide pipe 200 and the pilot valve seat meets the positioning requirements.

It should be understood that, referring to FIGS. 6 and 7, there is an arc-shaped section 105 at a position of the valve seat body 100 close to the first end 11, and the thickness *H* of the valve seat body 100 refers to a radial distance between the arc-shaped section 105 and the arc-shaped surface 102.

In another possible design, a shape of a projection of a groove bottom 1042b of the groove 104b in a reference plane is a straight line or a curved line. The reference plane passes through an axis of the valve seat body 100 and intersects with the valve seat body 100.

In some embodiments, specifically, referring to FIG. 8, the shape of the projection of the groove bottom 1042b of the groove 104b in the reference plane may be a straight line, which facilitates production and processing.

In other embodiments, the shape of the projection of the groove bottom 1042b of the groove 104b in the reference plane may also be a curved line. For example, referring to FIG. 9, the shape of the curved line may be an arc, and a bending direction of the arc is away from a groove opening of the groove 104b, which may increase a volume of the accommodating space to a certain extent, and further lower the possibility of the solder flowing out of the range of the pilot valve seat and forming solder beads.

Certainly, the curved line may also be V-shaped or a wavy line.

In an embodiment, a guiding inclined surface 1031 is provided at the connection between the lower surface 103 of the valve seat body 100 and the first end 11 of the valve seat body 100. The provision of the guiding inclined surface 1031 can facilitate installation of the slider.

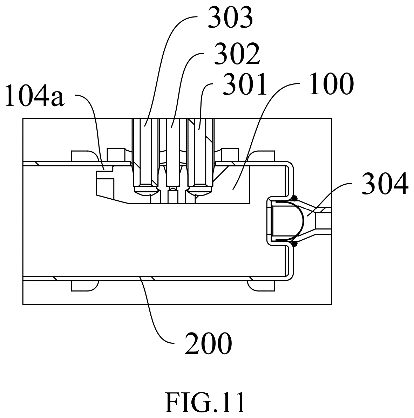

Referring to FIGS. 10 and 11, the present disclosure further provides a pilot valve, including a guide pipe 200, a capillary tube assembly, and the pilot valve seat according to the present disclosure. The valve seat body 100 is located inside the guide pipe 200. The capillary tube assembly is soldered to the pilot valve ports 101. The arc-shaped surface 102 of the valve seat body 100 is soldered to an inner wall of the guide pipe 200. An opening of the accommodating space faces the inner wall of the guide pipe 200.

The pilot valve according to the present disclosure adopts the pilot valve seat according to the present disclosure. When the guide pipe 200 and the capillary tube assembly are soldered, the pilot valve seat is mounted into the guide pipe 200, the arc-shaped surface 102 of the valve seat body 100 is in contact with the inner wall of the guide pipe 200, and the capillary tube assembly is inserted into the corresponding pilot valve ports 101. Since the accommodating space is spaced apart from the pilot valve ports 101, the installation of the capillary tube assembly will not be affected. The solder is added to the outer surfaces of the guide pipe 200 and the capillary tube assembly for soldering. During the soldering process, the solder may flow into the accommodating space of the valve seat body 100, which can lower the possibility of the solder flowing out of the range of the pilot valve seat and forming solder beads, reduce the hidden danger of solder flow, and ensure that the distance between the nozzle of the guide pipe 200 and the pilot valve seat meets the positioning requirements.

In an embodiment, the capillary tube assembly includes an E-capillary tube 301, an S-capillary tube 302, a C-capillary tube 303, and a D-capillary tube 304. One end of each of the E-capillary tube 301, the S-capillary tube 302, and the C-capillary tube 303 is inserted into a corresponding one of three pilot valve ports 101 to facilitate soldering. The D-capillary tube 304 is in communication with an end of the guide pipe 200 close to the second end 12 of the valve seat body 100.

It should be noted that the pilot valve further includes components such as a slider, an iron core, and an attractor. The slider and the iron core are mounted into the guide pipe 200 from an end of the guide pipe 200 close to the first end 11 of the valve seat body 100. The slider is connected to the iron core through a bracket. The attractor is fixedly connected to the guide pipe 200. The iron core may be attracted with or separated from the attractor to drive the slider to slide relative to the valve seat body 100, thereby realizing communication between different capillary tubes. A working principle of the pilot valve is known and will not be elaborated here.

The present disclosure further provides a reversing valve, including the pilot valve according to the present disclosure.

Since the reversing valve according to the present disclosure adopts the pilot valve according to the present disclosure, it can ensure that the distance between the nozzle of the guide pipe 200 and the pilot valve seat meets the positioning requirements, thereby ensuring effective control of the pilot valve over the reversing valve to realize flow path switching.

For example, the reversing valve according to the present disclosure may be a four-way valve.

Although the present disclosure has been described with reference to several typical embodiments, it should be understood that the terms used are illustrative and exemplary rather than restrictive. Since the present disclosure may be embodied in various forms without departing from the spirit or essence of the present disclosure, it should be understood that the above embodiments are not limited to any of the foregoing details, but should be interpreted broadly within the spirit and scope defined by the appended claims. Therefore, all changes and modifications falling within the scope of the claims or their equivalents should be covered by the appended claims.

## Claims

1. A pilot valve seat, comprising a valve seat body, wherein the valve seat body is provided with a plurality of pilot valve ports for connecting a capillary tube assembly; the valve seat body has an arc-shaped surface, the arc-shaped surface is provided with an accommodating space, and the accommodating space is spaced apart from the pilot valve ports.

2. The pilot valve seat according to claim 1, wherein the valve seat body has a first end and a second end oppositely arranged along an axial direction, and the accommodating space is located between the pilot valve ports and the first end.

3. The pilot valve seat according to claim 2, wherein the accommodating space is a step-shaped recess, and the step-shaped recess penetrates an end face of the first end of the valve seat body.

4. The pilot valve seat according to claim 3, wherein a length of the step-shaped recess is *A*, 0.5*mm*≤*A*≤0.5*L*, and a depth of the step-shaped recess is *H*₁, 0.2*mm*≤*H*₁≤0.5*H*, wherein *L* is a minimum distance between the end face of the first end of the valve seat body and an edge of the pilot valve port, and *H* is a thickness of the valve seat body.

5. The pilot valve seat according to claim 2, wherein the accommodating space is a groove, and the groove extends along a circumferential direction of the arc-shaped surface.

6. The pilot valve seat according to claim 5, wherein a width of the groove is *B*, 0.5*mm*≤*B*≤(*L*₁ - 0.5*mm*), and a depth of the groove is *H*₂, 0.2*mm*≤*H*₂≤0.5*H*, wherein *L*₁ is a distance between a groove wall of the groove away from the first end and an end face of the first end, 1*mm*≤*L*₁≤(0.5*L -* 0.5*mm*), *L* is a minimum distance between the end face of the first end of the valve seat body and an edge of the pilot valve port, and *H* is a thickness of the valve seat body.

7. The pilot valve seat according to claim 5, wherein a shape of a projection of a groove bottom of the groove in a reference plane is a straight line or a curved line, wherein the reference plane passes through an axis of the valve seat body and intersects with the valve seat body.

8. The pilot valve seat according to any one of claims 1 to 7, wherein a guiding inclined surface is provided at a connection between a lower surface of the valve seat body and a first end of the valve seat body.

9. A pilot valve, comprising a guide pipe, a capillary tube assembly, and the pilot valve seat according to any one of claims 1 to 8, wherein the valve seat body is located inside the guide pipe, the capillary tube assembly is soldered to the pilot valve ports, the arc-shaped surface of the valve seat body is soldered to an inner wall of the guide pipe, and an opening of the accommodating space faces the inner wall of the guide pipe.

10. A reversing valve, comprising the pilot valve according to claim 9.
